# EUROPÄISCHE PATENTSCHRIFT

(11) **EP 1 776 530 B1**
(45) Veröffentlichungstag und Bekanntmachung des Hinweises auf die Patenterteilung: **10.11.2010**
(21) Anmeldenummer: 05756162.3
(22) Anmeldetag: 15.06.2005
(51) Int. Cl.: F16D 1/08, F16C 3/02

(54) **WELLE**
SHAFT
ARBRE

(30) Priorität: 03.08.2004 DE 102004037782
(43) Veröffentlichungstag der Anmeldung: 25.04.2007
(60) Teilanmeldung: 09001805.2
(73) Patentinhaber: SEW-EURODRIVE GmbH & Co. KG, 76646 Bruchsal (DE)
(72) Erfinder: GANZ, Klaus, 76694 Forst (DE); BOLZ, Heinrich, 76689 Karlsdorf-Neuthard (DE); ZIMMERMANN, Heinrich, 76646 Bruchsal (DE)
(86) Internationale Anmeldenummer: PCT/EP2005/006391
(87) Internationale Veröffentlichungsnummer: WO 2006/015648

(56) Entgegenhaltungen:
- EP-A- 0 728 954
- EP-A2- 0 728 954
- EP-B- 0 907 458
- DE-A1- 2 322 451
- DE-A1- 3 511 534
- DE-A1- 10 316 155
- DE-A1-102004 004 456
- DE-U1- 29 914 802
- GB-A- 1 376 534
- US-A- 5 533 825
- US-A1- 2002 168 222
- US-A1- 2003 108 384
- PATENT ABSTRACTS OF JAPAN Bd. 2000, Nr. 13, 5. Februar 2001 (2001-02-05) -& JP 2000 304060 A (ATEX CO LTD), 31. Oktober 2000 (2000-10-31)
- PATENT ABSTRACTS OF JAPAN Bd. 009, Nr. 164 (M-395), 10. Juli 1985 (1985-07-10) -& JP 60 037418 A (MASAE YAMADA), 26. Februar 1985 (1985-02-26)
- DATABASE WPI Week 198416 Derwent Publications Ltd., London, GB; AN 1984-099144 XP002344316 -& SU 1 027 442 A (TRACTOR COMBINE ENG) 7. Juli 1983 (1983-07-07)

## Beschreibung

Die Erfindung betrifft eine Welle.

Aus der EP 0 907 458 B1 ist ein Herstellverfahren für Polygon-Formen bei Wellen und Naben bekannt.

Aus JP 2000 304060 A ist ein Übergangsbereich zwischen zwei Polygon-Abschnitten bekannt.

Aus der US 20031108384 A1 ist bekannt, in einem zweiten Abschnitt ein um einen Winkelbetrag gegenüber einem ersten Abschnitt verdrehtes Querschnitt-Profil einer Polygon-Verbindung vorzusehen.

Aus der EP 0 728 954 A2 ist eine Welle bekannt, die zwei axiale Abschnitte und einen axial zwischen diesen beiden Abschnitten angeordneten Übergangsbereich umfasst, wobei der Übergangsbereich einen elliptischen Verlauf des Durchmessers als Funktion der axialen Länge aufweist, wobei der elliptische Verlauf stetig differenzierbar an den Bereich mit dem kleineren maximalen Ausgangsdurchmesser angeschlossen ist.

Aus der DE 23 22 451 A1 ist eine Welle gemäß dem Oberbegriff des Anspruchs 1.

Der Erfindung liegt daher die Aufgabe zugrunde, im industriellen Wirtschaftsprozess den Umweltschutz zu verbessern, indem insbesondere die Standzeit der Vorrichtungen vergrößert wird.

Erfindungsgemäß wird die Aufgabe bei einer Welle nach den in Anspruch 1 angegebenen Merkmalen gelöst.

Von Vorteil ist dabei, dass die Festigkeit sehr stark erhöhbar ist, insbesondere bei Verwendung anderer Funktionen im Übergangsbereich.

Bei einer vorteilhaften Ausgestaltung liegen die Fertigungstoleranzen oder Abweichungen beim Fertigen des elliptischen Verlaufs im Bereich der ISO-Qualität IT6. Von Vorteil ist dabei, dass im Rahmen dieser Qualität auch Abweichungen oder andere Funktionsverläufe verwendbar sind. Beispielsweise sind auch entsprechend angepasste Polynom-Funktionen oder andere Funktionen hoher Ordnung verwendbar, wenn sie innerhalb des zu dieser IT-Qualität zugehörigen Toleranzbandes um die elliptische Funktion herum liegen.

Wichtige Merkmale bei einem Getriebe sind, dass es mindestens eine Eintriebswelle und eine Abtriebswelle umfasst,
wobei auf jeder Welle mindestens ein Verzahnungsteil mittels einer Welle-Nabe-Verbindung verbunden ist,
wobei die Welle-Nabe-Verbindung als Polygon-Verbindung ausgeführt ist, die mindestens zwei axiale Abschnitte umfasst,
wobei das erste Querschnitts-Profil der Polygon-Verbindung im ersten axialen Abschnitt sich vom zweiten Querschnitts-Profil der Polygon-Verbindung im zweiten axialen Abschnitt dadurch unterscheidet, dass das erste Profil mittels Drehung um einen nichtverschwindenden Winkelbetrag in das zweite Profil übergeht.

Von Vorteil ist dabei, dass eine sehr tragfähige und belastbare und/oder drehsteife Verbindung für die Verzahnungsteile vorgesehen ist. Somit ist die Standzeit des gesamten Getriebes verbessert. Insbesondere wenn mit dem das Getriebe umfassenden Antrieb auf Block gefahren wird, ist das Zerstörungsrisiko klein, weil die Polygon-Verbindung extrem belastbar ist und auch keine durch Kerbwirkungen verursachten Ausfälle wahrscheinlich sind. Weil somit die hohe Standzeit einen Austausch alter Getriebe verzögert, ist daher auch der Umweltschutz verbessert.

Weiterer Vorteil ist die einfache Montierbarkeit. Denn das Verzahnungsteil ist nur aufzustecken auf die Welle. Hingegen ist bei Getrieben des Standes der Technik die Passfederverbindung bekannt. Diese erfordert aber das Einlegen einer Passfeder und darauf folgendes Aufstecken des Verzahnungsteils. Somit ist beim Stand der Technik nicht nur das Montieren schwieriger sondern es ist sogar ein zusätzliches Teil, nämlich die Passfeder, erforderlich. Bei der Erfindung entfällt dieses zusätzliche Teil für alle Baugrößen und Varianten von Getrieben. Somit ist bei der Erfindung die Anzahl der Teile reduzierbar, die Verwaltung der Teile einfacher und Lagervolumina, Lagerkosten und Herstellkosten reduzierbar.

Darüber hinaus ist Herstellung der Welle mitsamt dem Polygon-Profil sehr einfach möglich, insbesondere in einer Maschine in einer Aufspannung. Im Gegensatz dazu muss beim Stand der Technik eine Nut für die Passfeder in einer zweiten Maschine eingearbeitet werden nach dem Fertigen der Welle, beispielsweise durch Fräsen.

Auch die Wiederverwendung der erfindungsgemäßen Welle mit Polygon-Verbindung innerhalb des Getriebebaukastens führt zu einer Reduzierung der Anzahl der Teile und somit auch der Lagerkosten.

Bei einer vorteilhaften Ausgestaltung umfasst das Getriebe eine oder mehrere Zwischenwellen, auf denen ebenfalls Verzahnungsteile mittels der als Polygon-Verbindung ausgeführten Welle-Nabe-Verbindung verbunden sind. Von Vorteil ist dabei, dass auch dort eine einfache Montage und eine hohe Belastbarkeit vorsehbar sind.

Bei einer vorteilhaften Ausgestaltung ist jede Welle mit den auf ihr verbundenen Verzahnungsteilen mittels der Polygon-Welle-Naben-Verbindung verbunden. Von Vorteil ist dabei, dass insgesamt vom Getriebe ein hohes Drehmoment übertragbar ist. Außerdem ist eine baukasteninterne Schnittstelle mit Polygon-Profil geschaffen, wodurch die Verzahnungstelle und Wellen wiederverwendbar sind innerhalb des Baukastens - auch bei anderen Baugrößen.

Bei einer vorteilhaften Ausgestaltung ist ein dritter axialer Abschnitt der Polygon-Verbindung vorgesehen, dessen Querschnitts-Profil mit dem ersten nicht aber mit dem zweiten Abschnitt identisch ist. Von Vorteil ist dabei, dass eine Verspannung des Verzahnteils nach Aufstecken desselben vorhanden ist.

Bei einer vorteilhaften Ausgestaltung sind weitere Abschnitte, insbesondere unendlich viele, mit weiteren einer jeweiligen Verdrehung zugeordneten Winkelbeträgen vorgesehen. Insbesondere sind derart viele Abschnitte vorgesehen, dass der Winkel eine Funktion des axialen Länge ist. Von Vorteil ist dabei, dass die Kerbwirkung vermindert ist, da keine oder nur kleine sprunghaften Änderungen innerhalb des Polygon-Bereiches vorhanden sind.

Bei einer vorteilhaften Ausgestaltung ist die Funktion symmetrisch zu einem axialen Punkt. Von Vorteil ist dabei, dass die Fertigung des Profils besonders einfach ist, die Kerbwirkung extrem verringert ist und die Verspannungskräfte ebenfalls symmetrisch sich ausbilden.

Bei einer vorteilhaften Ausgestaltung ist das Polygon eine Hypotrochoide oder aus Hypotrochoiden-Abschnitten zusammengesetzt. Von Vorteil ist dabei, dass eine besonders hoch belastbare Welle-Nabe-Verbindung vorhanden ist, die zusätzlich besonders schnell und kostengünstig fertigbar ist.

Bei einer vorteilhaften Ausgestaltung weist das Polygon zwischen 3 und 8 Ecken auf, insbesondere 4 Ecken oder 5 Ecken haben sich als vorteilhaft erwiesen.

Bei einer vorteilhaften Ausgestaltung ist der maximale Wellenaußendurchmesser eine monoton fallende Funktion des Parameters L. Von Vorteil ist dabei, dass die Montierbarkeit besonders einfach ist. Es ist nämlich die Welle durch eine für das große Lager vorgesehene Ausnehmung im Gehäuse einführbar und dann mit dem zuerst eingeführten Wellenende in das kleinere Lager einsteckbar.

Weitere Vorteile ergeben sich aus den Unteransprüchen.

### Bezugszeichenliste

- 1: zylindrischer Wellenabschnitt
- 2: erster Abschnitt mit Polygon-Profil
- 3: zweiter Abschnitt mit verdrehtem Polygon-Profil
- 4: dritter Abschnitt mit Polygon-Profil wie beim ersten Abschnitt 2
- 5: zylindrischer Wellenabschnitt
- 6: Fase
- 10: Nabe
- 12: Fase
- 61: zylindrischer Wellenabschnitt
- 62: Abschnitt mit Polygon-Profil
- 63: Übergangsbereich

Die Erfindung wird nun anhand von Abbildungen näher erläutert:

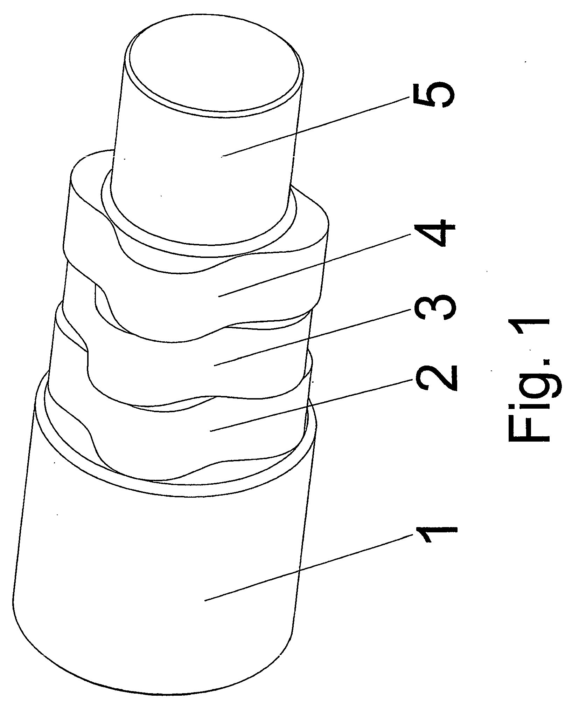

In der Figur 1 ist die Zwischenwelle eines Getriebes gezeigt. Dabei weist der zylindrische Wellenabschnitt 1 den größten Durchmesser auf. Dort ist auch der Lagersitz des größten Lagers angebracht.

In axialer Richtung, gekennzeichnet durch den Parameter L, folgt dann der erste Abschnitt 2 mit Polygon-Profil. Danach folgt der zweite Abschnitt 3 mit verdrehtem Polygon-Profil. Der darauf folgende dritte Abschnitt 4 mit Polygon-Profil ist wieder wie beim ersten Abschnitt 2 ausgeführt.

Das Wellenende ist als zylindrischer Wellenabschnitt 5 mit kleinstem Außendurchmesser ausgeführt, wo wiederum ein Lagersitz und gegebenenfalls Dichtungssitz vorgesehen ist.

Der maximale Wellenaußendurchmesser ist eine monoton fallende Funktion des Parameters L. Somit ist eine besonders einfache Montierbarkeit des Getriebes erreichbar.

Das Verzahnungsteil ist mit einer entsprechend geformten Polygon-Nabe ausgeführt, deren axiale Breite größer ist als die axiale Breite des Abschnitts 3. Somit ist nach dem Aufsetzen des Verzahnungsteiles eine Verspannung im Verbindungsbereich vorhanden, die zu einer festen hoch-belastbaren Verbindung führt, die ein sehr hohes Drehmoment übertragen kann. Insbesondere ist die Polygon-Verbindung fester und höher belastbar als eine Passfederverbindung bei entsprechendem Verzahnungsteil und entsprechender Zwischenwelle.

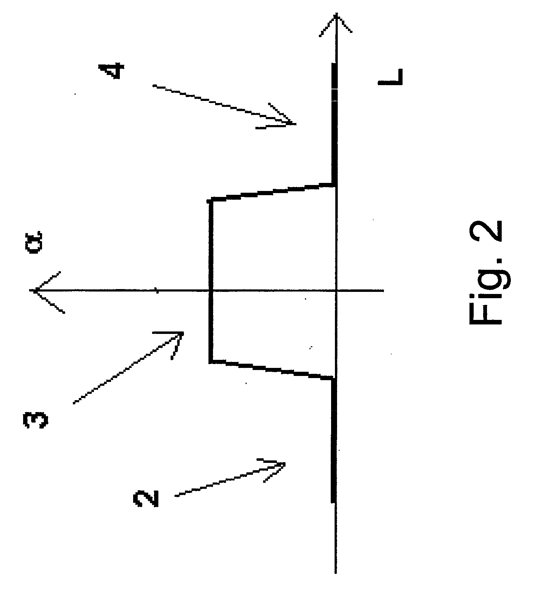

Figur 2 zeigt den Drehwinkelverlauf in Abhängigkeit von der axialen Länge. Im ersten Abschnitt 2 ist der Verdrehwinkel des Profils Null. Danach steigt er an auf einen Wert für den zweiten Abschnitt 3 und fällt dann wieder ab auf Null im dritten Abschnitt 4. Der Wert beträgt zwischen 0,1° und 1°. Besonders vorteilhaft haben sich Werte um 0,3° bis 0,5° herum erwiesen.

Eine besonders schnelle und kostengünstige Fertigung der Polygon-Ausformung der Welle und Nabe ist dann der Fall, wenn das Polygon eine Hypotrochoide ist oder aus

Hypotrochoiden-Abschnitten zusammengesetzt ist. Darüber hinaus ist die Festigkeit und Belastbarkeit der Verbindung in diesem Fall sehr hoch. Dies gilt auch insbesondere für Polygone mit 4 Ecken oder zumindest 3 bis 8 Ecken.

In weiteren Ausführungsbeispielen sind auch Verdrehwinkelverläufe mit mehreren Stufen vorteilhaft.

Das Getriebe ist beispielsweise ein ein- oder mehrstufiges Stirnrad-Getriebe, wobei die Verzahnungsteile Stirnräder sind.

Bei anderen Getrieben sind auch Kegelräder als Verzahnungsteile oder Spiroplan-verzahnte Teile als Verzahnungsteile vorsehbar.

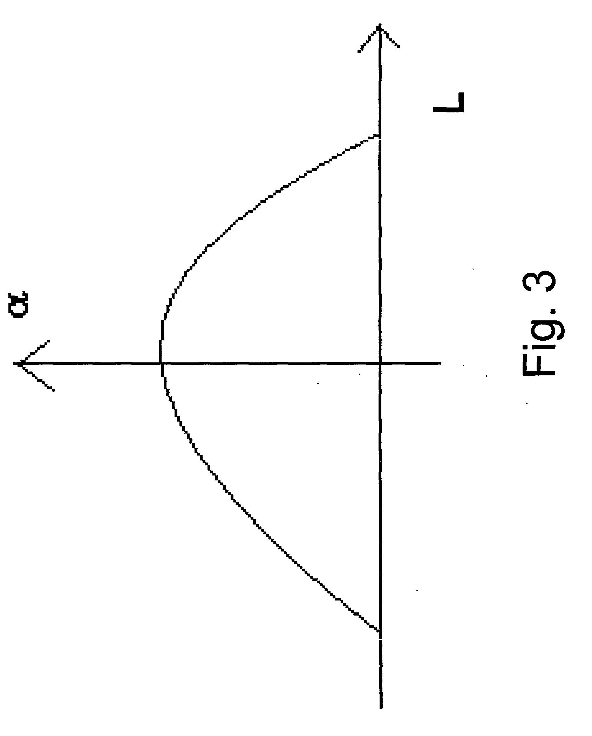

Figur 3 zeigt einen kontinuierlichen Verlauf des Verdrehwinkels, der zu besonders geringer Kerbwirkung führt. Außerdem ist die Fertigungsqualität sehr gut beherrschbar.

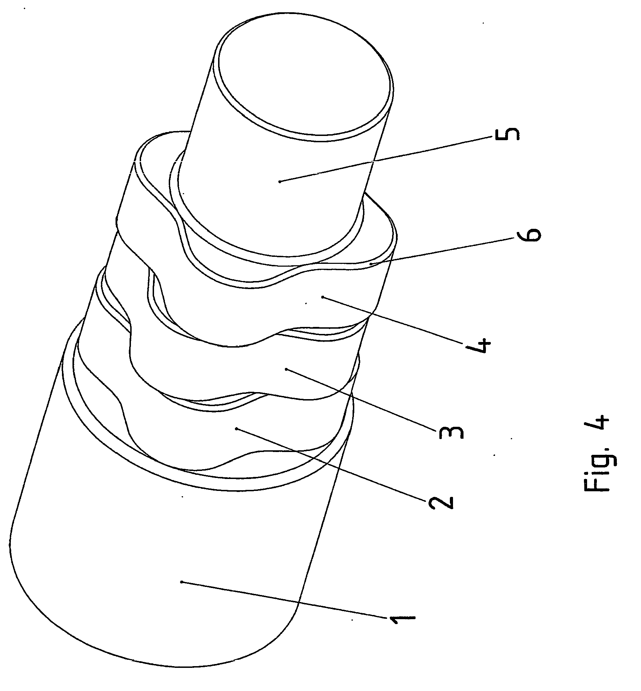

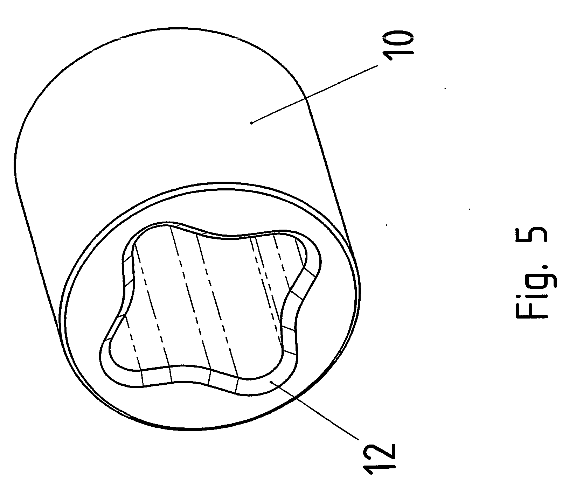

Figur 4 zeigt eine weitere Ausführungsform bei der Welle. Figur 5 zeigt eine zugehörige Nabe 10. Die Welle weist an der Kante des dritten axialen Polygon-Abschnittes eine Fase 6 auf. Wichtig ist dabei, dass die Fase im Verlauf der Form des Polygons folgt. Somit ist ein Einfädeln oder Einführen in die zugehörige Nabe erleichtert. Die Fertigung der Fase ist für den Fachmann zwar ungewöhnlich, ist aber in einfacher Weise mit modernen Produktionsmaschinen ausführbar und daher kostengünstig.

Die weiteren axialen Abschnitte weisen ebenfalls eine Fase an den hervortretenden Kantenbereichen auf.

Die Nabe 10 weist einen polygonalen Abschnitt in Hohlform auf, wobei wiederum eine Fase 12 vorhanden ist, die das Einfädeln verbessert.

Für alle Antriebskomponenten, wie Motor, Elektromotor, Bremse, Getriebe Kupplung oder dergleichen, ist also charakteristisch, dass eine Fase dieser besonderen Form, also der polygonalen Form, vorhanden ist.

Bei einer weiteren Ausführungsform ist im zweiten axialen Abschnitt 3 und im ersten axialen Abschnitt 2 der Figur 4 die Fase derart vergrößert, dass ein stetiger Übergang zwischen den axialen Bereichen erfolgt und keine unstetigen Bereiche vorhanden sind. Somit ist die Belastbarkeit der Welle noch weiter erhöht.

Somit ist klar, dass die obige Lehre nicht nur bei einem Getriebe anwendbar ist sondern auch bei einer anderen Antriebskomponente, wie Elektromotor, Getriebe, Bremse, Kupplung oder dergleichen. Die Lehre ist auf alle Welle-Nabe-Verbindungen anwendbar, also auch für Teile, die auf eine Welle formschlüssig aufgesteckt werden, wie Zahnräder oder Zykloscheiben eines Zyklogetriebes oder Bremsbelagträger einer Bremse oder Kupplungsteil einer Kupplung. Die vorgenannten Merkmale, insbesondere auch die Fase in polygonaler Form sind also nicht nur in einem Getriebe vorsehbar sondern auch in jeder weiteren Antriebskomponente, wie beispielsweise Elektromotor, Bremse oder Kupplung.

Erfindungsgemaß ist es zur weiteren Verbesserung der Tragfähigkeit wichtig und wesentlich zwischen den zylindrischen Wellenabschnitten und den Polygon-Wellenabschnitten einen Übergangsbereich zu schaffen, der die bei der Drehmomentübertragung auftretenden Spannungen verringert.

Es hat sich herausgestellt, dass eine einfache Rundung, wie beispielsweise Kreisrundung, im Übergangsbereich eine Sollbruchstelle darstellen kann.

Daher ist ein wesentliches zusätzliches Merkmal der Erfindung bei der Ausführung des Übergangsbereiches erkannt worden.

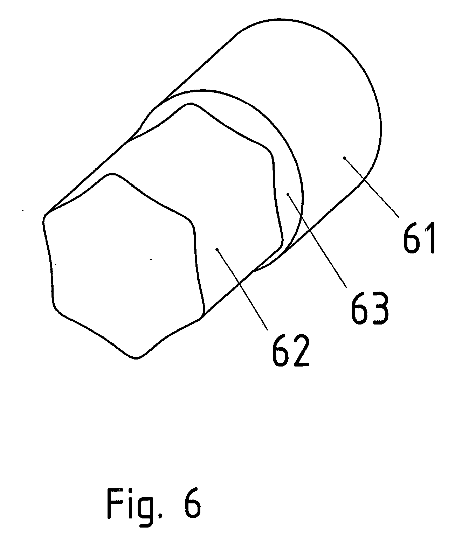

Dazu ist in der Figur 6 nochmals dargestellt, dass ein Übergangsbereich 63 zwischen dem zylindrischen Wellenabschnitt 61 und dem Polygon-Abschnitt 62 vorgesehen ist.

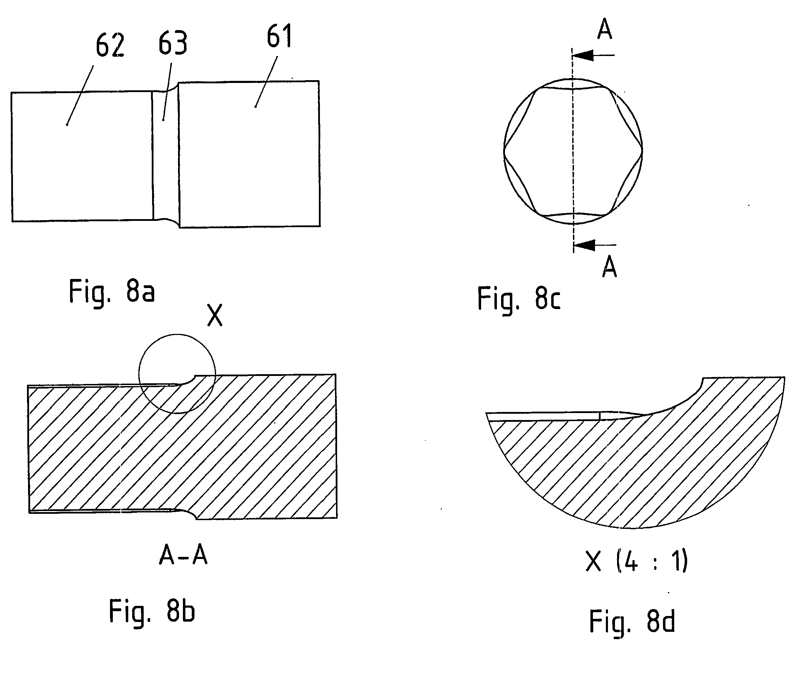

In Figur 8a ist eine Seitenansicht durch die Welle gezeigt.

In Figur 8b ist ein Längsschnitt durch die Welle gezeigt.

In Figur 8c ist eine Draufsicht durch die Welle gezeigt.

In Figur 8d ist eine Vergrößerung des Verlaufes im Übergangsbereich gezeigt, der dem gekennzeichneten Bereich X der Figur 8b entspricht.

Der Übergangsbereich ist bei allen Wellen einsetzbar, die einen Polygonwellenabschnitt und einen benachbarten zylindrischen Wellenabschnitt aufweisen.

Vom Polygonwellenabschnitt 62 ausgehend verläuft der Außendurchmesser des Übergangsbereiches 63 in axialer Richtung ansteigend, wobei die Steigung von Null langsam in axialer Richtung zunimmt.

Um die Festigkeit zu steigern ist ein axial möglichst langer Übergangsbereich 63 zu schaffen. Jedoch ist die axiale Länge für den Übergangsbereich 63 begrenzt. Bei der Erfindung hat sich überraschend herausgestellt, dass auch auf axial kurzer Länge ein Übergangsbereich 63 vorsehbar ist, der zu einer hohen Festigkeit führt und die Dauerbruchfestigkeit vergrößert.

Dazu wird erfindungsgemäß gemäß Figur 8d der Verlauf des Durchmessers im Übergangsbereich 63 in axialer Richtung elliptisch gewählt. Die Ellipse ist dabei so gewählt, dass sie stetig und differenzierbar an den angrenzenden Durchmesser des Polygonbereichs 62 angeschlossen ist.

Aus der Drehmomentübertragung und/oder einer Umlaufbiegebelastung resultierende Spannungsüberhöhungen werden dadurch erheblich reduziert. Die Folge ist eine deutliche Festigkeitssteigerung der Welle in diesem Bereich. Bei gleicher Belastung der Welle wird somit das Versagen durch Rissbildung und/oder Dauerbruch im Übergangsbereich ganz verhindert oder aber zumindest deutlich verzögert.

Abweichungen von diesem ellipsenförmigen Verlauf sind nur im Rahmen der Fertigungstoleranzen erlaubt, sollten also bei üblichen Getrieben, die von einem Motor mit einigen kW Leistung angetrieben werden, unter 50 µm sein. Vorteiliger und festigkeitserhöhender ist jedoch eine Abweichung von weniger als 10 µm.

Je nach Baugröße sind die Abweichungen betragsmäßig verschieden. Wesentlich ist, dass die Fertigungstoleranzen im Bereich der IT-Qualität IT6 der ISO-Toleranzreihe liegen.

Der elliptische Verlauf hat gegenüber polynominalem oder Radius-Verläufen überraschenderweise sehr vorteilige Wirkung, insbesondere festigkeitserhöhende. Selbstverständlich ist ein Polynom extrem hoher Ordnung an den erfindungsgemäßen ellipsenförmigen Verlauf anpassbar mit geringen Abweichungen, Je höher die Ordnung des Polynoms desto geringer sind die Abweichungen zur Ellipse wählbar.

Bei weiteren erfindungsgemäßen Ausführungsbeispielen ist der zylindrische Wellenbereich kleiner als jeder Durchmesser im Polygon-Wellenbereich. Dabei ist dann ebenfalls der genannte elliptische Verlauf vorteiligerweise festigkeitserhöhend, wobei die Ellipse dann auch wiederum an den Bereich mit kleinerem Durchmesser stetig differenzierbar angeschlossen ist.

Das Auslaufen der Ellipse am Bereich mit größerem Durchmesser kann undifferenzierbar erfolgen oder auch mit einem Kantenbruch, also einer Abrundung der entstehenden Kante, beispielsweise mit einem Radius von 0,5 mm.

Bei der Erfindung wird zwar von Funktionsverläufen, wie Ellipse und Polynom, gesprochen und es werden Begriffe aus dem Bereich mathematischer Funktionen verwendet, jedoch sind die technischen Realisierungen nur mit numerisch gesteuerten Fertigungsmaschinen ausgeführt und somit werden statt der Funktionen immer nur zwischen vorgebbaren Stützpunkten interpolierte Verläufe vorgegeben. Die erfindungsgemäßen Ausführungen sind also immer im Rahmen dieser technischen Realisierungsmöglichkeiten zu sehen.

## Patentansprüche

1. Welle,
umfassend zumindest zwei axiale Abschnitte (62, 61) und einen axial zwischen diesen beiden Abschnitten angeordneten Übergangsbereich (63),
wobei die beiden axialen Abschnitte (62, 61) verschieden sind,
wobei die beiden Abschnitte einen an den Übergangsbereich (63) angrenzenden, verschieden großen maximalen Außendurchmesser aufweisen,
wobei der erste Abschnitt (62) ein Polygon-Wellenabschnitt ist und der zweite Abschnitt (61) ein zylindrischer Bereich ist,
**dadurch gekennzeichnet, dass**
der Übergangsbereich (63) einen elliptischen Verlauf des Durchmessers als Funktion der axialen Länge umfasst,
wobei der elliptische Verlauf stetig differenzierbar an den Bereich mit dem kleineren maximalen Außendurchmesser angeschlossen ist.

2. Welle nach Anspruch 1,
**dadurch gekennzeichnet, dass**
der Übergangsbereich (63) in einer die Achse der Welle enthaltenden Schnittebene einen elliptischen Verlauf des Durchmessers als Funktion der axialen Länge umfasst.

3. Welle nach mindestens einem der vorangegangenen Ansprüche,
**dadurch gekennzeichnet, dass**
der elliptischen Verlauf in einer und/oder allen Ebenen vorgesehen ist, die die mathematisch gedachte Achse der Welle enthalten.

4. Welle nach mindestens einem der vorangegangenen Ansprüche,
**dadurch gekennzeichnet, dass**
die Fertigungstoleranzen oder Abweichungen beim Fertigen des elliptischen Verlaufs im Bereich der ISO-Qualität IT6 liegen.

5. Welle nach mindestens einem der vorangegangenen Ansprüche,
**dadurch gekennzeichnet, dass**
die Fertigungstoleranzen oder Abweichungen beim Fertigen des elliptischen Verlaufs geringer sind als 50µm.

6. Welle nach mindestens einem der vorangegangenen Ansprüche,
**dadurch gekennzeichnet, dass**
die Fertigungstoleranzen oder Abweichungen beim Fertigen des elliptischen Verlaufs geringer sind als 10µm.

## Claims

1. Shaft,
comprising at least two axial sections (62, 61) and a transition region (63) arranged axially between these two sections,
the two axial sections (62, 61) being different,
the two sections having a different-size maximum outside diameter adjoining the transition region (63),
the first section (62) being a polygonal shaft section and the second section (61) being a cylindrical region,
**characterised in that**
the transition region (63) comprises an elliptical course of the diameter as a function of the axial length,
the elliptical course being connected in a continuously differentiable manner to the region with the smaller maximum outside diameter.

2. Shaft according to Claim 1,
**characterised in that**
the transition region (63) comprises, in a section plane containing the axis of the shaft, an elliptical course of the diameter as a function of the axial length.

3. Shaft according to at least one of the preceding claims,
**characterised in that**
the elliptical course is provided in one and/or all planes which contain the mathematically imaginary axis of the shaft.

4. Shaft according to at least one of the preceding claims,
**characterised in that**
the process tolerances or deviations in the production of the elliptical course are in the range of ISO Grade IT6.

5. Shaft according to at least one of the preceding claims,
**characterised in that**
the process tolerances or deviations in the production of the elliptical course are less than 50 µm.

6. Shaft according to at least one of the preceding claims,
**characterised in that**
the process tolerances or deviations in the production of the elliptical course are less than 10 µm.

## Revendications

1. Arbre,
comprenant au moins deux portions axiales (62, 61) et une zone de transition (63) disposée axialement entre ces deux portions,
les deux portions axiales (62, 61) étant différentes,
les deux portions présentant un diamètre extérieur de valeur maximale différente au voisinage de la zone de transition (63),
la première portion (62) étant une portion d'arbre polygonale et la deuxième portion (61) une région cylindrique,
**caractérisé en ce que**
la zone de transition (63) comprend un tracé elliptique du diamètre en fonction de la longueur axiale,
le tracé elliptique étant raccordé de manière continûment dérivable à la région de plus petit diamètre extérieur maximal.

2. Arbre selon la revendication 1,
**caractérisé en ce que**
la zone de transition (63) comprend un tracé elliptique du diamètre en fonction de la longueur axiale dans un plan de coupe contenant l'axe de l'arbre.

3. Arbre selon au moins une des revendications précédentes,
**caractérisé en ce que**
le tracé elliptique est prévu dans un et/ou tous les plans qui contiennent l'axe mathématiquement imaginaire de l'arbre.

4. Arbre selon au moins une des revendications précédentes,
**caractérisé en ce que**
les tolérances de fabrication ou écarts lors de la fabrication du tracé elliptique se situent dans le domaine de la qualité ISO IT6.

5. Arbre selon au moins une des revendications précédentes,
**caractérisé en ce que**
les tolérances de fabrication ou écarts lors de la fabrication du tracé elliptique sont inférieurs à 50 µm.

6. Arbre selon au moins une des revendications précédentes,
**caractérisé en ce que**
les tolérances de fabrication ou écarts lors de la fabrication du tracé elliptique sont inférieurs à 10 µm.
